# EUROPEAN PATENT SPECIFICATION

(11) **EP 1 325 639 B1**
(45) Date of publication and mention of the grant of the patent: **02.01.2004**
(21) Application number: 01967370.6
(22) Date of filing: 07.09.2001
(51) Int. Cl.: H04Q 3/00, H04Q 7/22

(54) **A METHOD AND A DEVICE FOR SETTING UP AND RELEASING A DATA-COMMUNICATION LINK**
VERFAHREN UND EINRICHTUNG ZUR EINRICHTUNG UND FREIGABE EINER DATENKOMMUNIKATIONSSTRECKE
PROCEDE ET SYSTEME D'ETABLISSEMENT ET DE LIBERATION D'UNE LIAISON DE COMMUNICATION DE DONNEES

(30) Priority: 18.09.2000 FI 20002060
(43) Date of publication of application: 09.07.2003
(73) Proprietor: Sonera Oyj, 00510 Helsinki (FI)
(72) Inventor: LINDQVIST, Anssi, FIN-00610 Helsinki (FI); KESKIIVARI, Pekka, FIN-01190 Box (FI)
(74) Representative: Simmelvuo, Markku
(86) International application number: PCT/FI2001/000782
(87) International publication number: WO 2002/028114

(56) References cited:
- WO-A1-00/51331
- WO-A1-98/19445
- US-A- 5 956 391
- US-B1- 6 317 609

## Description

The invention relates to telecommunication systems. In particular, the invention relates to a new and enhanced method in which a data-communication link, i.e. its setting up and setting down, is controlled easily and safely by means of two terminal devices connected to the telecommunication network.

### BACKGROUND OF THE INVENTION

With the rapid digital development it is possible to provide the users of an intelligent network with more and more enhanced services. Typically, an intelligent network consists of a terminal device, an exchange of the telecommunications network and a service point of the intelligent network. When the terminal device sends an identifier of a certain service, e.g. a series of numbers, the exchange knows by the identifier that it is a question about an IN call, so the call is directed to the service point of the intelligent network. In the service point of the intelligent network, the requested service of the intelligent network is identified, and the facility connected with the service is completed.

One example of the above-mentioned IN service is an answering machine service located in the intelligent network. When the user connects to the subscriber line an IN answering machine, the calls received into the subscriber line are forwarded to the answering service located in the telephone network. The effective implementation of the service is enabled by the service point of the intelligent network placed in the network that implements the answering machine functionality.

Usually, the billing of a telephone network has been arranged in telephone exchanges. When the user makes a phone call, the call is registered in the exchange. At present, Internet-based telecommunication connections are usually based on billing on monthly basis without a more specific specification of the traffic quantities or services used. On the other hand it is possible to monitor the use of the telecommunication connections with devices designed for the monitoring of telecommunication connections. Their use is, however, cumbersome and laborious, if one wishes to monitor the traffic of the whole Internet telecommunication network, or separate random communications. If it were possible to monitor separate connections, then the connections could be used e.g. for services liable to charge, for the implementing of a videophone service or video conferencing call.

In a video conferencing call there is transmitted both the voice information and the image information via the telecommunication network from the sender to the recipient. Video conferencing equipment consists of recording equipment of voice and image as well as presentation equipment of voice and image. Typically, the acquisition, maintenance and use of video conferencing equipment is costly and cumbersome. Due to this, specific video conferencing rooms are built that have been equipped with video conferencing systems. One solution for video conferencing rooms is portable video conferencing equipment, example of which let it be mentioned patent EP 0 836 324 A2, "Integrated portable videoconferencing", to which reference is made herein as the presentation of prior art.

One specific problem is becoming the real-time and accurate monitoring of a telecommunication connection via the telephone network. It would be preferable, if it were possible to develop a system which could be used to use the existing technology infrastructures to monitor the set-up and set-down of a telecommunication connection. Also the user identification would certainly be preferable. At present, terminal devices are identified based on the IP number (IP, Internet Protocol). The IP number does not individualize the user of the terminal device.

Other system such as disclosed in WO-A-9819445 discloses a method to enable a user to order telecommunication services by means of a computer. The use of the connection cannot be monitored as well as the restricted access rights.

### BRIEF DESCRIPTION OF THE INVENTION

The objective of the present invention is to eliminate or alleviate the problems referred to above.

One specific objective of the invention is to disclose a solution in which telecommunication connections are monitored by means of a telephone network or some other telecommunication network. Usually, telephone networks and telecommunication networks have comprised their own system-specific means for the monitoring of the connections and billing. Often there are developed only the telephone network systems or telecommunication systems without any interoperation between the systems. The objective of the invention is to combine the existing monitoring and billing technique.

One further objective of the invention is to enable a simple solution to an important problem by utilizing the existing technology: how to efficiently monitor the use of telecommunication connections. The invention also provides a solution for granting a restricted access right to a particular service, as well as for an efficient user identification.

When a first telecommunication connection is established between two terminal devices, information about the connection set-up is saved to a connection card located in the database of the service point of the intelligent network. The connection card may be used to determine whether the establishment of a data-communication link between two Internet terminal devices is allowed. If the connection card is valid, then the connection is established between two Internet terminal devices, otherwise the connection is set down, or its establishment is barred. Typically, a data-communication link is set up using a connection server, to which both of the Internet terminal devices establish a connection.

The invention enables one to easily manage a data-communication link by means of a terminal device connected to the first telecommunication network. When there is a connection established between two terminal devices or between subscriber lines, the information about the connection is saved to the connection card located in the database. If there is, at some later point, an attempt to establish a connection between two Internet terminal devices, then the connection set-up is allowed, if one can find in the database the connection card concerning the connection that includes the information about either one or both of the terminal devices that is relevant to the identification.

The invention relates to a method for setting up and setting down a data-communication link in a telecommunication system. In the method, a first telecommunication connection is established between a first terminal device and a second terminal device preferably by way of the service point of the intelligent network, and a second data-communication link is established between a first Internet terminal device and a second Internet terminal device by way of the connection server. An Internet terminal device may be used to mean any terminal device of transferring data or information. From the point of view of the invention it is not substantial that the second telecommunication network is an Internet network, instead any telecommunication network is suitable.

Furthermore, in the method of the invention, a first telecommunication connection is established from the first terminal device to the second terminal device by means of the identifier of the service and the subscriber number of the second terminal device, and the connection card is saved to the database of the service point of the intelligent network. Next, a connection is established from the first Internet terminal device to the connection server, and a connection is established from the second Internet terminal device to the connection server. Finally, a connection is established between the first and the second Internet terminal device, if the connection card of the database includes an approval for the connection set-up, or the connection between the first and the second Internet terminal device is set down, if an approval for the connection set-down can be found in the connection card of the database. The connection card may in this connection mean largely any information stored in the intelligent network that concerns the connection between the first and the second terminal device. The embodiments of the invention are not limited to the use of the connection card or to the content. The decisions on the connection set-up and set-down are made based on checks made in the intelligent network. The checks are used to make sure that the connection between the Internet terminal devices is allowed based on the identification information relating to the terminal devices and the connection card.

In one embodiment of the invention, the subscriber numbers of the first and the second terminal device are saved to the connection card. Usually, the connection card is a numerical or a text-formed data record of a fixed length in a digital form that is placed in the database of the intelligent network. One can save the identifier of the service, the allowed duration and/or validity of the telecommunication connection to the connection card.

In one embodiment of the invention, the first terminal device is connected to a general packet radio service (GPRS, General Packet Radio Service). Also the second terminal device may be connected to the general packet radio service. Advantageously, the first Internet terminal device and the second Internet terminal device are connected to a telecommunication network consistent with the Internet protocol. Since the first and the second Internet terminal device establish a connection to the connection server, it is advantageous to connect the first and the second Internet terminal device in the connection server. Usually, as the identifier of the service, a four-digit series of numbers is used, but series of numbers of some other length may also be used as the identifier of the service.

The system for setting up and setting down a connection in a telecommunication network consists of a first telecommunication network, first and second terminal device, service point of the intelligent network, database, second telecommunication network, first and second Internet terminal device, and a connection server. The system of the invention further comprises a storage device for storing the connection card in the intelligent network (IN) and a device of establishing a telecommunication connection that comprises means for the telecommunication connection set-up, if there is a valid connection card in the database. Advantageously, the system of the invention may comprise a device of setting down the telecommunication connection that comprises means for the telecommunication connection set-down, if there is no valid connection card in the database.

In one system in accordance with the invention, the first and the second terminal device are connected to a general packet radio service network. Usually, the first and the second Internet terminal device are connected to a telecommunication system consistent with the Internet protocol, but as was stated above, also other systems may be used. The system in accordance with the invention may further be supplemented by attaching to the first Internet terminal device a digital or an analog camera recording moving image. Also to the second Internet terminal device, a display device may be attached for presenting the image of the camera. In that case, it is possible via the system to transmit moving image from the camera to the display device.

As compared to prior art, the invention has the advantages that the setting up and setting down of a data-communication link can be easily managed using an ordinary terminal device. This makes it possible to easily monitor the costs resulting from the data-communication link because they may be added directly to the invoice of the terminal device. Therefore, the invention enables savings on costs as compared to previous systems. In addition, with the invention, the user identification gets certainly easier. Often the user of a mobile station is accurately identified, or at least the owner of the subscription is known. Since the invention enables one to identify an Internet subscription connected with the terminal device, also the user of the Internet terminal device may be accurately identified.

### BRIEF DESCRIPTION OF THE DRAWINGS

In the following section, the invention will be described by the aid of the attached examples of its embodiments with reference to the accompanying drawing, in which
Fig. 1 represents one illustration of the system in accordance with the invention;
Fig. 2 is a flow chart illustrating the method of the invention;
Fig. 3 represents one system in accordance with the invention;
Fig. 4 represents one signaling diagram in accordance with the invention; and
Fig. 5 represents one signaling diagram in accordance with the invention.

### DETAILED DESCRIPTION OF THE INVENTION

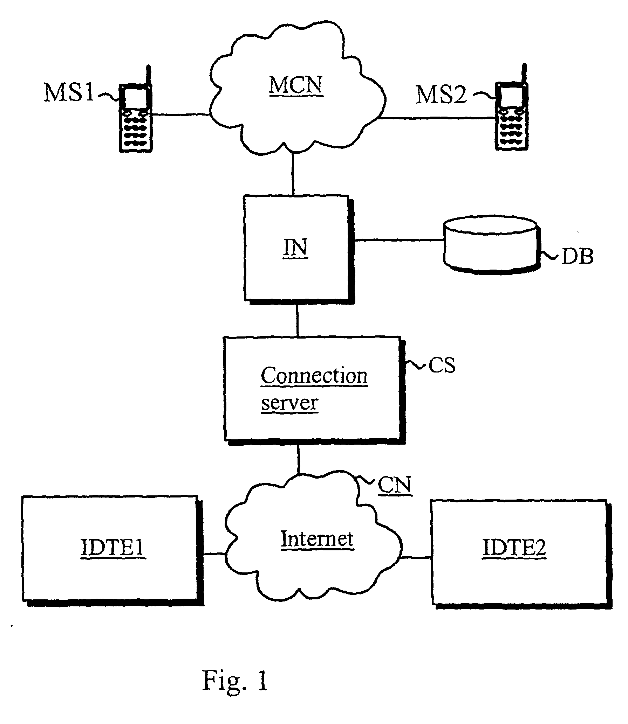

Fig. 1 represents one system in accordance with the invention. The first terminal device MS1 and the second terminal device MS2 are connected to the mobile communication network MCN. Usually the terminal devices are mobile stations from which there is a connection via base stations preferably to the general packet radio network (GPRS). Connected to the telecommunication network is further the first IDTE1 and the second Internet terminal device IDTE2, which enable one to efficiently transmit information via an Internet telecommunication network. The set-up and set-down of the connection between the Internet terminal devices is preferably managed from the connection server, because both terminal devices establish a connection with the connection server. The operation of the connection server is controlled from the service point of the intelligent network IN, whose operation is affected by the connection card saved to the database DB. If there is a connection card in the database whose information is consistent with the connection to be established, then the connection between the first and the second Internet terminal device may be established. On the other hand, if there is no connection card in the database, then the telecommunication connection is set down, or its establishment is barred. The connection card is in a preferred case implemented by generating in the database a connection data record of a fixed length that is in a digital form and that comprises several fields for saving the information.

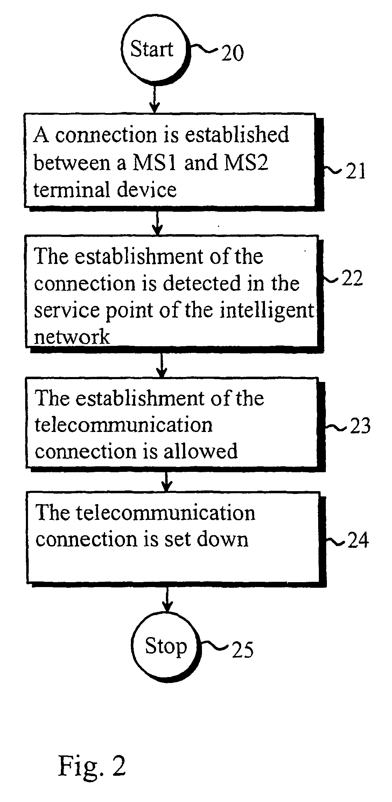

Fig. 2 represents one diagram of the method of the invention. At first, a first telecommunication connection is established between the first MS1 and the second terminal device MS2, block 21. Next, the aforementioned establishment of the connection is detected in the service point of the intelligent network IN, after which a connection card of the connection is saved to the database DB. Based on this, the establishment of the second data-communication link may be allowed between the first IDTE1 and the second Internet terminal device IDTE2, blocks 22 and 23. When the connection card is eliminated from the database DB, also the data-communication link between the first IDTE1 and the second Internet terminal device IDTE2 is set down, block 24. Typically, the connection card is eliminated from the database DB, when the telecommunication connection time registered in the connection card has been spent, or otherwise the second data-communication link is set down.

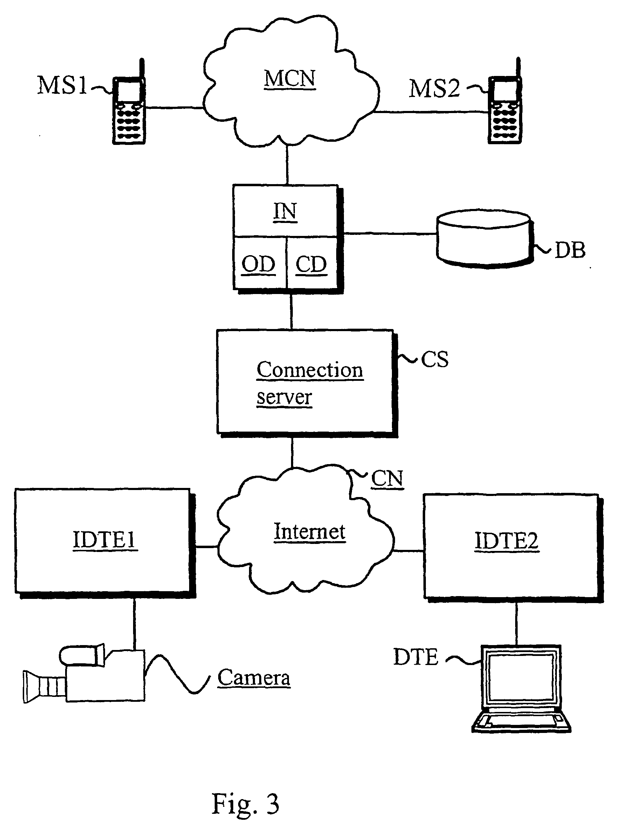

Fig. 3 represents one system in accordance with the invention. The first terminal device MS1 and the second terminal device MS2 are connected to the mobile communication network MCN, such as e.g. a general packet radio network (GPRS) or a GSM network. Further, connected to the telecommunication network consistent with the Internet protocol are a first IDTE1 and a second Internet terminal device IDTE2, by means of which it is possible to efficiently transmit information via the Internet telecommunication network. The set-up and set-down of the connection between the Internet terminal devices is managed from the connection server CS, whose operation is affected by the service point of the intelligent network IN. In the service point of the intelligent network IN there is a storage device S for saving the connection card, as well as means for setting up the connection OD, and means for setting down the connection CD. From the service point of the intelligent network IN there is also a connection to the mobile communication network MCN. The set-up of the connection between the Internet terminal devices is affected by the connection card in the database DB that preferably includes information about the access rights to the service or to the data-communication link. Further, the system may be supplemented by attaching to the first Internet terminal device IDTE1 a camera for sending a moving image. On the other hand it is possible to attach to the second Internet terminal device IDTE2 a display terminal DTE for receiving a moving image. In that case, the second data-communication link is used for transmitting the image.

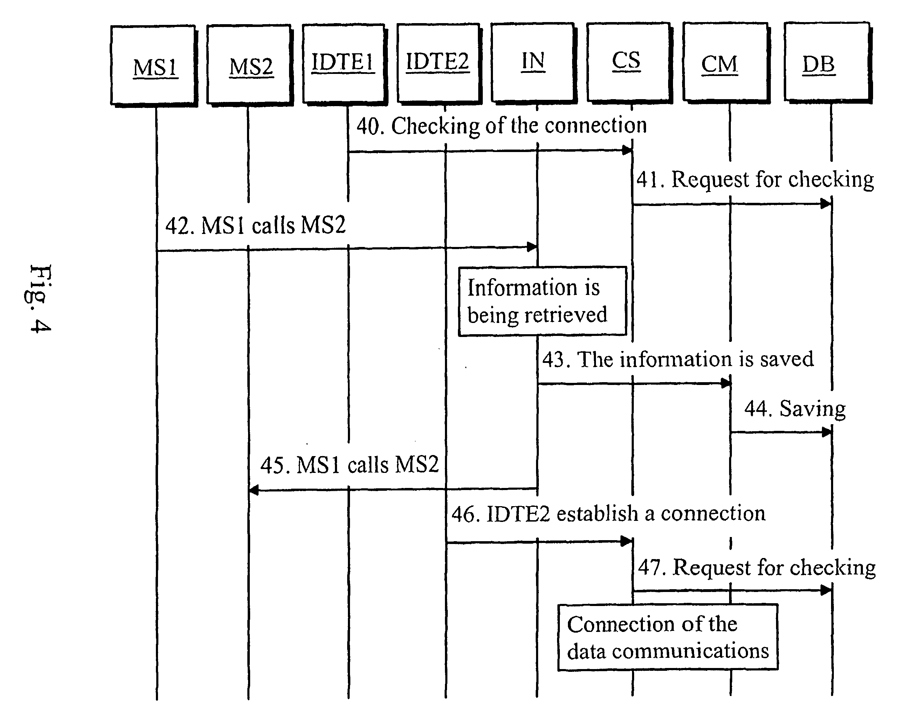

Fig. 4 represents one signaling diagram in accordance with the invention. At first it is preferably checked whether there are already telecommunication connections existing by sending a message from the first Internet terminal device IDTE1 to the connection server CS, block 40. From the connection server CS, the message is transmitted further to the database DB, block 41. If there are no connections, or if the establishing of a connection between the Internet terminal devices IDTE1 and IDTE2 is possible at all, then the establishing of the first telecommunication connection may be started f rom the first terminal device MS1 to the service point of the intelligent network IN, block 42. The information related to the establishment of the first connection, such as the subscriber number of the first and the second terminal device and the identifier of the service, is sent via the connection manager CM to the database DB, in which there is generated a connection card concerning the connection, blocks 43 and 44. After this, a connection may be established from the service point of the intelligent network IN to the second terminal device MS2, block 45. Since there is the connection card saved to the database DB, it is possible to establish a connection from the second terminal device IDTE2 to the connection server CS, block 46. The connection server CS checks the information included in the connection card from the database DB, after which it is possible to establish a second data-communication link between the first IDTE1 and the second Internet terminal device IDTE2 in the connection server CS, block 47.

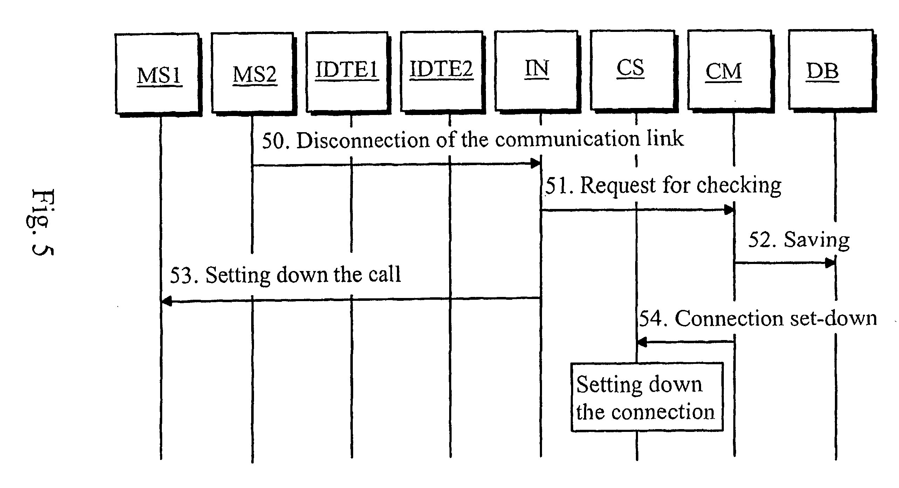

Fig. 5 represents one signaling diagram in accordance with the invention. The figure shows the set-down of a telecommunication connection. At first, a message informing of the connection set-down is sent from the second terminal device MS2 to the service point of the intelligent network IN, block 50. The information related to the connection is checked via the connection manager CM from the database DB, blocks 51 and 52. If there is the connection card in the database, then a message informing of the connection set-down is sent to the first terminal device MS1, and the connection is set down by sending a message from the connection manager CM and by setting down the connection in the connection server CS, blocks 53 and 54.

The invention is not restricted to the examples of its embodiments referred to above, instead many variations are possible within the scope of the inventive idea defined by the claims.

## Claims

1. A method for setting up and setting down a data-communication link in a telecommunication system comprising the steps of:
setting up a first connection between a first terminal device (MS1) and a second terminal device (MS2) via a service point of the intelligent network (IN); and
setting up a second data-communication link between a first Internet terminal device (IDTE1) and a second Internet terminal device (IDTE2) via a connection server (CS),
**characterized in that** the method comprises the steps of:
setting up the first connection from the first terminal device (MS1) to the second terminal device (MS2) by means of a service identifier and a subscriber number of the second terminal device (MS2);
saving a connection card relating to the first connection to a database DB of the service point of the intelligent network IN; and
setting up the second data-communication link between the first (IDTE1) and the second Internet terminal device (IDTE2), if there is an approval for the set-up of the connection in the connection card of the database DB.

2. The method according to claim 1, **characterized in that** the method further comprises the steps of:
setting up a connection from the first and the second Internet terminal device (IDTE2) to the connection server (CS) ;
setting up in the connection server the aforementioned second data-communication link between the first (IDTE1) and the second Internet terminal device (IDTE2).

3. The method according to claim 1, **characterized in that**
the data-communication link between the first (IDTE1) and second Internet terminal device (IDTE2) is set down, if there is an approval for the set-down of the data-communication link in the connection card of the database (DB).

4. The method according to claim 1, 2 or 3, **characterized in that** the subscriber numbers of the first (MS1) and the second terminal device (MS2) are saved to the connection card.

5. The method according to claim 1, 2, 3 or 4, **characterized in that** the identifier of the service is saved to the connection card.

6. The method according to claim 1, 2, 3, 4 or 5, **characterized in that** the duration of the telecommunication connection is saved to the connection card.

7. The method according to claim 1, 2, 3, 4, 5 or 6, **characterized in that** a validity period is saved to the connection card.

8. The method according to claim 1, 2, 3, 4, 5, 6 or 7, **characterized in that** the first terminal device (MS1) is connected to a general packet radio service (GPRS).

9. The method according to claim 1, 2, 3, 4, 5, 6, 7 or 8, **characterized in that** the second terminal device (MS2) is connected to a general packet radio service (GPRS).

10. The method according to claim 1, 2, 3, 4, 5, 6, 7, 8 or 9, **characterized in that** the first Internet terminal device (IDTE1) is connected to a telecommunication network consistent with the Internet protocol (IP).

11. The method according to claim 1, 2, 3, 4, 5, 6, 7, 8, 9 or 10, **characterized in that** the second Internet terminal device (IDTE2) is connected to a telecommunication network consistent with the Internet protocol (IP).

12. The method according to claim 1, 2, 3, 4, 5, 6, 7, 8, 9, 10 or 11, **characterized in that** the connection server (CS) is used for connecting the first (IDTE1) and the second Internet terminal device (IDTE2).

13. The method according to claim 1, 2, 3, 4, 5, 6, 7, 8, 9, 10, 11 or 12, **characterized in that** a four-digit series of numbers is used as the identifier of the service.

14. A system for setting up and setting down a telecommunication connection in a telecommunication system comprising:
a first telecommunication network (MCN);
a first terminal device (MS1), which is connected to the first telecommunication network (MCN);
a second terminal device (MS2), which is connected to the first telecommunication network (MCN);
a service point of an intelligent network (IN), which is connected to the first telecommunication network MCN);
a database (DB), which is connected to the service point of the intelligent network (IN) ;
a second telecommunication network (CN);
a first Internet terminal device (IDTE1), which is connected to the second telecommunication network (CN) ;
a second Internet terminal device (IDTE2), which is connected to the second telecommunication network (CN); and
a connection server (CS), which is connected to the service point of the intelligent network (IN) and to the second telecommunication network (CN), **characterized in that** the system comprises:
a storage device (S) for storing a connection card in the intelligent network (IN); and
a device for establishing a telecommunication connection (OD), which comprises means for setting up the telecommunication connection, if there is a valid connection card in the database (DB).

15. The system according to claim 14, **characterized in that** the system further comprises a device for setting down a telecommunication connection (CD), which comprises means for setting down the telecommunication connection, if there is no valid connection card in the database (DB).

16. The system according to claim 14 or 15, **characterized in that** the first terminal device (MS1) is connected to a general packet radio service (GPRS).

17. The system according to claim 14, 15 or 16, **characterized in that** the second terminal device (MS2) is connected to a general packet radio service (GPRS) .

18. The system according to claim 14, 15, 16 or 17, **characterized in that** the first Internet terminal device (IDTE1) is connected to a telecommunication system consistent with the Internet protocol.

19. The system according to claim 14, 15, 16, 17 or 18, **characterized in that** the second Internet terminal device (IDTE2) is connected to a telecommunication system consistent with the Internet protocol.

20. The system according to claim 14, 15, 16, 17, 18 or 19, **characterized in that** a camera is connected to the first Internet terminal device (IDTE1).

21. The system according to claim 14, 15, 16, 17, 18, 19 or 20, **characterized in that** a display device (DTE) is connected to the second Internet terminal device (IDTE2) for displaying the image.

## Patentansprüche

1. Verfahren zum Aufbauen und Abbauen einer Datenübertragungsverbindung in einem Telekommunikationssystem, umfassend folgende Schritte:
Aufbauen einer ersten Verbindung zwischen einem ersten Endgerät (MS1) und einem zweiten Endgerät (MS2) über einen Servicepunkt eines intelligenten Netzwerks (IN); und
Aufbauen einer zweiten Datenübertragungsverbindung zwischen einem ersten Internet-Endgerät (IDTE1) und einem zweiten Internet-Endgerät (IDTE2) über einen Verbindungsserver (CS),
**dadurch gekennzeichnet, dass** das Verfahren folgende Schritte aufweist:
Aufbauen der ersten Verbindung von dem ersten Endgerät (MS1) zu dem zweiten Endgerät (MS2) mittels einer Dienstkennung und einer Teilnehmernummer des zweiten Endgeräts (MS2);
Aufbewahren einer sich auf die erste Verbindung beziehenden Verbindungskarte in einer Datenbank (DB) an dem Servicepunkt des intelligenten Netzwerks (IN); und
Aufbauen der zweiten Datenübertragungsverbindung zwischen dem ersten (IDTE1) und dem zweiten Internet-Endgerät (IDTE2), wenn es ein Einverständnis für den Aufbau der Verbindung in der Verbindungskarte der Datenbank (DB) gibt.

2. Verfahren nach Anspruch 1, **dadurch gekennzeichnet, dass** es weiterhin folgende Schritte aufweist:
Aufbauen einer Verbindung von dem ersten und dem zweiten Internet-Endgerät (IDTE2) zu dem Verbindungsserver (CS);
Aufbauen der genannten zweiten Datenübertragungsverbindung zwischen dem ersten (IDTE1) und dem zweiten Internet-Endgerät (IDTE2) in dem Verbindungsserver.

3. Verfahren nach Anspruch 1, **dadurch gekennzeichnet, dass** die Datenübertragungsverbindung zwischen dem ersten (IDTE1) und dem zweiten Internet-Endgerät (IDTE2) abgebaut wird, wenn es ein Einverständnis für den Abbau der Datenübertragungsverbindung in der Verbindungskarte der Datenbank (DB) gibt.

4. Verfahren nach Anspruch 1, 2 oder 3, **dadurch gekennzeichnet, dass** die Teilnehmernummern des ersten (MS1) und des zweiten Endgeräts (MS2) in der Verbindungskarte aufbewahrt werden.

5. Verfahren nach Anspruch 1, 2, 3 oder 4, **dadurch gekennzeichnet, dass** die Kennung des Service in der Verbindungskarte aufbewahrt wird.

6. Verfahren nach Anspruch 1, 2, 3, 4 oder 5, **dadurch gekennzeichnet, dass** die Dauer der Telekommunikationsverbindung in der Verbindungskarte aufbewahrt wird.

7. Verfahren nach Anspruch 1, 2, 3, 4, 5 oder 6, **dadurch gekennzeichnet, dass** in der Verbindungskarte eine Gültigkeitsdauer aufbewahrt wird.

8. Verfahren nach Anspruch 1, 2, 3, 4, 5, 6 oder 7, **dadurch gekennzeichnet, dass** das erste Endgerät (MS1) mit einem General-Packet-Radio-Service (GPRS) verbunden wird.

9. Verfahren nach Anspruch 1, 2, 3, 4, 5, 6, 7 oder 8, **dadurch gekennzeichnet, dass** das zweite Endgerät (MS2) mit einem General-Packet-Radio-Service (GPRS) verbunden wird.

10. Verfahren nach Anspruch 1, 2, 3, 4, 5, 6, 7, 8 oder 9, **dadurch gekennzeichnet, dass** das erste Internet-Endgerät (IDTE1) nach Maßgabe des Internet-Protokolls (IP) mit einem Telekommunikationsnetzwerk verbunden wird.

11. Verfahren nach Anspruch 1, 2, 3, 4, 5, 6, 7, 8, 9 oder 10, **dadurch gekennzeichnet, dass** das zweite Internet-Endgerät (IDTE2) nach Maßgabe des Internetprotokolls (IP) mit einem Telekommunikationsnetzwerk verbunden wird.

12. Verfahren nach Anspruch 1, 2, 3, 4, 5, 6, 7, 8, 9, 10 oder 11, **dadurch gekennzeichnet, dass** der Verbindungsserver (CS) zum Verbinden des ersten (ID-TE1) mit dem zweiten Internet-Endgerät (IDTE2) verwendet wird.

13. Verfahren nach Anspruch 1, 2, 3, 4, 5, 6, 7, 8, 9, 10, 11 oder 12, **dadurch gekennzeichnet, dass** eine vier Ziffern umfassende Folge von Zahlen als Kennung für den Service verwendet wird.

14. System zum Aufbauen und Abbauen einer Telekommunikationsverbindung in einem Telekommunikationssystem, umfassend:
ein erstes Telekommunikationsnetzwerk (MCN);
ein erstes Endgerät (MS1), das an das erste Telekommunikationsnetzwerk (MCN) angeschlossen ist;
ein zweites Endgerät (MS2), das an das erste Telekommunikationsnetzwerk (MCN) angeschlossen ist;
einen Servicepunkt eines intelligenten Netzwerks (IN), das an das erste Tetekommunikationsnetzwerk (MCN) angeschlossen ist;
eine Datenbank (DB), die an den Servicepunkt des intelligenten Netzwerks (IN) angeschlossen ist;
ein zweites Telekommunikationsnetzwerk (CN);
ein erstes Internet-Endgerät (IDTE1), das an das zweite Telekommunikationsnetzwerk (CN) angeschlossen ist;
ein zweites Internet-Endgerät (IDTE2), das an das zweite Telekommunikationsnetzwerk (CN) angeschlossen ist; und
einen Verbindungsserver (CS), der an den Servicepunkt des intelligenten Netzwerks (IN) und an das zweite Telekommunikationsnetzwerk (CN) angeschlossen ist, **dadurch gekennzeichnet, dass** das System aufweist:
eine Speichereinrichtung (S) zum Speichern einer Verbindungskarte in dem intelligenten Netzwerk (IN); und
eine Einrichtung zum Einrichten einer Telekommunikationsverbindung (OD), die eine Einrichtung zum Aufbauen der Telekommunikationsverbindung aufweist, wenn es eine zulässige Verbindungskarte in der Datenbank (DB) gibt.

15. System nach Anspruch 14, **dadurch gekennzeichnet, dass** es weiterhin eine Einrichtung zum Abbauen einer Telekommunikationsverbindung (CD) aufweist, die ihrerseits eine Einrichtung zum Abbauen der Telekommunikation dann aufweist, wenn es keine zulässige Verbindungskarte in der Datenbank (DB) gibt.

16. System nach Anspruch 14 oder 15, **dadurch gekennzeichnet, dass** das erste Endgerät (MS1) an ein General-Packet-Radio-Service (GPRS) angeschlossen ist.

17. System nach Anspruch 14, 15 oder 16, **dadurch gekennzeichnet, dass** das zweite Endgerät (MS2) an ein General-Packet-Radio-Service (GPRS) angeschlossen ist.

18. System nach Anspruch 14, 15, 16 oder 17, **dadurch gekennzeichnet, dass** das erste Internet-Endgerät (IDTE1) entsprechend dem Internetprotokoll an ein Telekommunikationssystem angeschlossen ist.

19. System nach Anspruch 14, 15, 16, 17 oder 18, **dadurch gekennzeichnet, dass** das zweite Internet-Endgerät (IDTE2) entsprechend dem Internetprotokoll an ein Telekommunikationssystem angeschlossen ist.

20. System nach Anspruch 14, 15, 16, 17, 18 oder 19, **dadurch gekennzeichnet, dass** an das erste Internet-Endgerät (IDTE1) eine Kamera angeschlossen ist.

21. System nach Anspruch 14, 15, 16, 17, 18, 19 oder 20, **dadurch gekennzeichnet, dass** an das zweite Internet-Endgerät (IDTE2) zur Bildanzeige eine Anzeigevorrichtung (DTE) angeschlossen ist.

## Revendications

1. Procédé d'établissement et de coupure d'une liaison de communication de données, au niveau d'un système de télécommunication, comprenant les étapes consistant à :
établir une première connexion entre un premier dispositif terminal (MS1) et un second dispositif terminal (MS2), par l'intermédiaire d'un point de service du réseau intelligent (IN) ; et
établir une deuxième liaison de communication de données entre un premier dispositif terminal d'Internet (IDTE1) et un second dispositif terminal d'Internet (IDTE2), par l'intermédiaire d'un serveur de connexion (CS).
**caractérisé en ce que** le procédé comprend les étapes consistant à :
établir la première connexion du premier dispositif terminal (MS1) au second dispositif terminal (MS2), au moyen d'un identificateur de service et d'un numéro d'abonné du second dispositif terminal (MS2) ;
sauvegarder une carte de connexion concernant la première connexion dans une base de données DB du point de service du réseau intelligent IN ; et
établir la deuxième liaison de communication de données entre le premier (IDTE1) et le second (IDTE2) dispositif terminal d'Internet, si une autorisation pour l'établissement de la connexion est en cours dans la carte de connexion de la base de données DB.

2. Procédé selon la revendication 1, **caractérisé en ce que** le procédé comprend de plus les étapes consistant à :
établir une connexion à partir du premier et du second dispositif terminal d'Internet (IDTE2), vers le serveur de connexion (CS) ;
établir, dans le serveur de connexion, la deuxième liaison susmentionnée de communication de données, entre le premier (IDTE1) et le second (IDTE2) dispositif terminal d'Internet.

3. Procédé selon la revendication 1, **caractérisé en ce que**
la liaison de communication de données entre le premier (IDTE1) et le second (IDTE2) dispositif terminal d'Internet est coupée si une autorisation de coupure de la liaison de communication de données est en cours dans la carte de connexion de la base de données (DB).

4. Procédé selon la revendication 1, 2 ou 3, **caractérisé en ce que** les numéros d'abonné du premier (MS1) et du second (MS2) dispositif terminal sont sauvegardés dans la carte de connexion.

5. Procédé selon la revendication 1, 2, 3 ou 4, **caractérisé en ce que** l'identificateur du service est sauvegardé dans la carte de connexion.

6. Procédé selon la revendication 1, 2, 3, 4 ou 5, **caractérisé en ce que** la durée de la connexion de télécommunication est sauvegardée dans la carte de connexion.

7. Procédé selon la revendication 1, 2, 3, 4, 5 ou 6, **caractérisé en ce qu'**une période de validité est sauvegardée dans la carte de connexion.

8. Procédé selon la revendication 1, 2, 3, 4, 5, 6 ou 7, **caractérisé en ce que** le premier dispositif terminal (MS1) est relié à un service radioélectrique général de communications par paquets (GPRS).

9. Procédé selon la revendication 1, 2, 3, 4, 5, 6, 7ou 8 **caractérisé en ce que** le second dispositif terminal (MS2) est relié à un service radioélectrique général de communications par paquets (GPRS).

10. Procédé selon la revendication 1, 2, 3, 4, 5, 6, 7, 8 ou 9, **caractérisé en ce que** le premier dispositif terminal d'Internet (IDTE1) est relié à un réseau de télécommunication compatible avec le protocole Internet (IP).

11. Procédé selon la revendication 1, 2, 3, 4, 5, 6, 7, 8, 9 ou 10, **caractérisé en ce que** le second dispositif terminal d'Internet (IDTE2) est relié à un réseau de télécommunication compatible avec le protocole Internet (IP).

12. Procédé selon la revendication 1, 2, 3, 4, 5, 6, 7, 8, 9, 10 ou 11, **caractérisé en ce que** le serveur de connexion (CS) sert à relier le premier (IDTE1) et le second (IDTE2) dispositif terminal d'Internet.

13. Procédé selon la revendication 1, 2, 3, 4, 5, 6, 7, 8, 9, 10, 11 ou, 12, **caractérisé en ce qu'**une suite de nombres à quatre chiffres sert d'identificateur du service.

14. Système permettant d'établir et de couper une connexion de télécommunication dans un système de télécommunication comprenant :
un premier réseau de télécommunication (MCN) ;
un premier dispositif terminal (MS1), relié au premier réseau de télécommunication (MCN) ;
un second dispositif terminal (MS2), relié au premier réseau de télécommunication (MCN) ;
un point de service d'un réseau intelligent (IN), relié au premier réseau de télécommunication (MCN) ;
une base de données (DB), reliée au point de service du réseau intelligent (IN) ;
un second réseau de télécommunication (CN) ;
un premier dispositif terminal d'Internet (IDTE1), relié au second réseau de télécommunication (CN) ;
un second dispositif terminal d'Internet (IDTE2), relié au second réseau de télécommunication (CN) ; et
un serveur de connexion (CS), relié au point de service du réseau intelligent (IN) et au second réseau de télécommunication (CN), **caractérisé en ce que** le système comprend :
un dispositif de stockage (S) permettant de stocker une carte de connexion dans un réseau intelligent (IN) ; et
un dispositif permettant d'établir une connexion de télécommunication (OD), qui comprend des moyens permettant d'établir la connexion de télécommunication, s'il existe une carte de connexion en cours de validité dans la base de données (DB).

15. Système selon la revendication 14, **caractérisé en ce que** le système comprend de plus un dispositif permettant de couper une connexion de télécommunication (CD), qui comprend des moyens permettant de couper la connexion de télécommunication s'il n'existe pas de carte de connexion en cours de validité dans la base de données (DB).

16. Système selon la revendication 14 ou 15, **caractérisé en ce que** le premier dispositif terminal (MS1) est relié à un service radioélectrique général de communications par paquets (GPRS).

17. Système selon la revendication 14, 15 ou 16, **caractérisé en ce que** le second dispositif terminal (MS2) est relié à un service radioélectrique général de communications par paquets (GPRS).

18. Système selon la revendication 14, 15, 16 ou 17, **caractérisé en ce que** le premier dispositif terminal d'Internet (IDTE1) est relié à un réseau de télécommunication compatible avec le protocole Internet (IP).

19. Système selon la revendication 14, 15, 16, 17 ou 18, **caractérisé en ce que** le second dispositif terminal d'Internet (IDTE2) est relié à un réseau de télécommunication compatible avec le protocole Internet (IP).

20. Système selon la revendication 14, 15, 16, 17, 18 ou 19, **caractérisé en ce qu'**une caméra est reliée au premier dispositif terminal d'Internet (IDTE1).

21. Système selon la revendication 14, 15, 16, 17, 18, 19 ou 20, **caractérisé en ce qu'**un dispositif d'affichage (DTE) est relié au second dispositif terminal d'Internet (IDTE2), afin d'afficher l'image.
